# EUROPEAN PATENT SPECIFICATION

(11) **EP 4 060 574 B1**
(45) Date of publication and mention of the grant of the patent: **29.04.2026**
(21) Application number: 22161570.1
(22) Date of filing: 11.03.2022
(51) Int. Cl.: G06Q 10/04, G06Q 10/00, B65F 5/00, G06Q 10/08, G06Q 10/30, G06Q 10/047

(54) **METHOD FOR THE INTELLIGENT CONTROL OF WASTE COLLECTION IN AN AUTOMATED WASTE COLLECTION PLANT**
VERFAHREN ZUR INTELLIGENTEN STEUERUNG DER ABFALLSAMMLUNG IN EINER AUTOMATISCHEN ABFALLSAMMELANLAGE
PROCÉDÉ DE COMMANDE INTELLIGENT DE COLLECTE DE DÉCHETS DANS UNE INSTALLATION AUTOMATIQUE DE COLLECTE DE DÉCHETS

(30) Priority: 17.03.2021 EP 21382212
(43) Date of publication of application: 21.09.2022
(73) Proprietor: URBAN REFUSE DEVELOPMENT, SLU, 25003 Lleida (ES); Universitat de Lleida, 25003 Lérida (ES)
(72) Inventor: FARRÉ CABANILLAS, Josep Anton, 25310 Agramunt (ES); FERNÁNDEZ CAMON, César, 25193 Lleida (ES); MATEU PIÑOL, Carlos, 25001 Lleida (ES)
(74) Representative: Torner, Juncosa I Associats, SL

(56) References cited:
- EP-A1- 2 666 737
- KR-A- 20190 113 015

## Description

### FIELD OF THE INVENTION

The present invention generally relates to waste collection methods and systems. In particular, the invention relates to a computer-implemented method for the intelligent/smart control of waste collection in an automated waste collection plant.

### BACKGROUND OF THE INVENTION

In general, an automated waste collection plant (or system/facility) normally uses air suction by means of a vacuum system in a closed network of underground pipes, covering an area of a few square kilometers, for conveying the waste from delivery points, which comprise inlets, distributed for example in one part or all over a city, to a central collection point, reducing greenhouse gas emissions and the drawbacks of conventional methods (smells, noise, etc.), in addition to allowing the waste to be better reused and recycled.

From a plant operation viewpoint, automated waste collection plants today are generally rather inefficient in terms of energy and on an economic level mainly due to the fact that waste collection or removal is neither adapted to plant occupation levels nor to the energy cost during collection.

Likewise, to enable modeling and controlling an automated waste collection plant correctly, precise knowledge of the different parts of said plant is required.

The emergence and evolution of automatic learning-based artificial intelligence techniques has made it possible to approach such modeling and control.

For example, patent application EP2666737A1, belonging to the same inventors as the present invention, provides a method for the removal of waste in an automated waste collection plant where automatic learning techniques or algorithms are used for the planning operations of plants. The objective is to achieve optimal operation plans, at any time, based on the current state of the different parts of the plants and on previous experiences, which minimize energy consumption subject to pre-established service quality standards. This method uses machine learning techniques and linear programming algorithms for the planning operations of the automated waste collection plant; however this previous patent application is completely silent on the different models computed by the present invention and in the provision and training of a virtual agent to evaluate the energy consumption of a series of actions of a waste collection plant and to establish emptying control decision-making policies for a real waste collection plant. Hence, although this previous method has been proven to be efficient, there is still room for reducing energy consumption, and also the cost, involved with the operation of these plants.

KR20190113015A relates to an artificial intelligent automatic collection system based on database capable of minimizing maintenance costs. Information such as detection of a level sensor, a number of inlet door openings, and a weighing of a waste weight is collected in a garbage inlet, and stored in database, and is analyzed so as to selectively performing automatic collection only from an inlet which meets a certain conditions. This system neither includes nor uses the cited virtual agent of present invention.

Therefore, new methods for the intelligent/smart control of waste collection in an automated waste collection plant are required.

### DESCRIPTION OF THE INVENTION

To this end, embodiments of the present invention provide a computer-implemented method for the intelligent control of waste collection in an automated waste collection plant. The proposed method comprises storing, in a memory or database, operating information of a plurality of real automated waste collection plants, wherein the operating information at least includes, for each of a number of the emptying cycles of each real plant: the number of inlets (i.e. the containers/boxes were the waste (i.e. rubbish/garbage) is put/stored) of the plant being emptied, the distance from the emptied inlets to a collection center (or central collection point), the type of waste, the volume of the waste, and the time instant in which the emptying cycle takes place. Additionally, an energy value corresponding to the energy used in the corresponding emptying cycle is also stored in the memory or database.

The method also comprises generating/computing, by a processing unit, an energy usage model (i.e. a model of the energy consumption of the emptying cycles of one or more inlets) of at least one specific automated waste collection plant. To do so, the processing unit runs/executes a first artificial intelligence algorithm, comprising a first neural network, that, for each emptying cycle of the specific automated waste collection plant: a) computes a predicted energy value using as inputs the operating information stored in the memory or database, b) compares the computed predicted energy value with the energy value stored in the memory or database; and c) adjusts the first neural network (i.e. adjusts its weight values/parameters) if the comparison is different; where steps a) to c) are repeated until a comparation result is below or equal a given error threshold.

The method also comprises training, by a processing unit, a virtual agent by means of running a second artificial intelligence algorithm comprising a second neural network. The second neural network evaluates the energy consumption of a series of actions of the specific automated waste collection plant (or of any other automated waste collection plant), in response to a plurality of waste loading/occupation situations in the inlets, by means of: i) selecting, given a loading state of the specific/other automated waste collection plant considered, a given action to perform; ii) evaluating a cost of said given action using the generated energy usage model; and iii) minimizing the cost by means of adjusting the second neural network (i.e. adjust the weight values/parameters thereof). Steps i) to iii) are repeated until the cost is below or equal a given threshold or for a limited number of repetitions.

The method also comprises receiving, by the virtual agent, in real time, information relating to a loading/capacity state of the inlets of a real automated waste collection plant, and the virtual agent establishing one or more emptying control decision-making policies of the real automated waste collection plant based on the received information and on actions considered optimal during the training. Lastly, the real automated waste collection plant is operated according to the mentioned emptying control decision-making policy/policies established by the virtual agent.

In one embodiment, the method further calculates a time duration model of the time each emptying cycle takes, particularly by means of running a third artificial intelligence algorithm, comprising a third neural network, on at least part of the operating information stored in the memory or database.

The first and third neural networks particularly comprise a deep learning-based neural network. Likewise, the second neural network comprises a deep reinforcement learning-based neural network.

In some particular embodiments, the different neural networks comprise a Deep Feed Forward (DFF). The features of the invention can nevertheless be implemented via other neural networks.

In one embodiment, the operating step is performed by a controller device operatively connected to each of the inlets of the real waste collection plant, after having received the control decision from the virtual agent.

In one embodiment, prior to the step of operating the real waste collection plant according to the mentioned emptying control decision-making policy/policies established by the virtual agent, it is verified from information relating to the loading state of the inlets of the real waste collection plant if the emptying control decision-making policy/policies adopted is/are determining factor(s) of a real energy consumption optimization.

According to the proposed method, the mentioned emptying control decision-making policy/policies may comprise emptying one or more of the inlets of the real waste collection plant; activating or deactivating vacuum-based emptying systems for emptying the inlets; and/or increasing or reducing the speed of vacuum-based emptying systems for emptying the inlets, among others.

The specific waste collection plant may comprise a single waste collection plant, or alternatively a virtual waste collection plant which compiles operating information of a plurality of real waste collection plants.

Other embodiments of the invention disclosed herein also include computer program products for performing the steps and operations performed by the proposed method. More particularly, a computer program product is an embodiment having a computer-readable medium including code instructions encoded therein which, when run in at least one processor of the computer system, cause the processor to perform the operations indicated herein as embodiments of the invention.

### BRIEF DESCRIPTION OF THE DRAWINGS

The foregoing and other features and advantages will be better understood from the following merely illustrative and non-limiting detailed description of embodiments in reference to the attached drawings, in which:
Fig. 1 is a flowchart illustrating a method for the intelligent control of waste collection in an automated waste collection plant, according to one embodiment of the present invention.
Fig. 2 schematically illustrates the architecture of a system for the intelligent control of waste collection, according to one embodiment of the present invention.
Fig. 3 schematically illustrates the architecture used for operating the virtual agent.

### DETAILED DESCRIPTION OF THE INVENTION

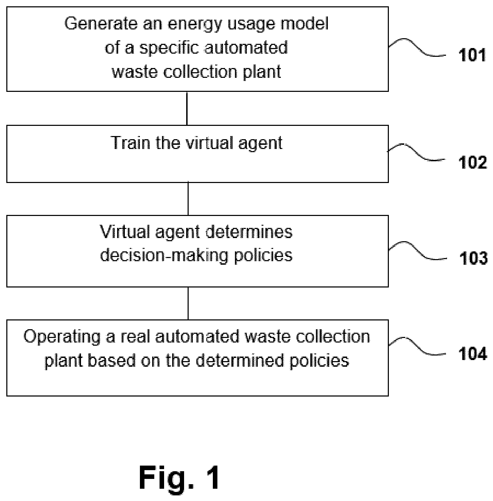

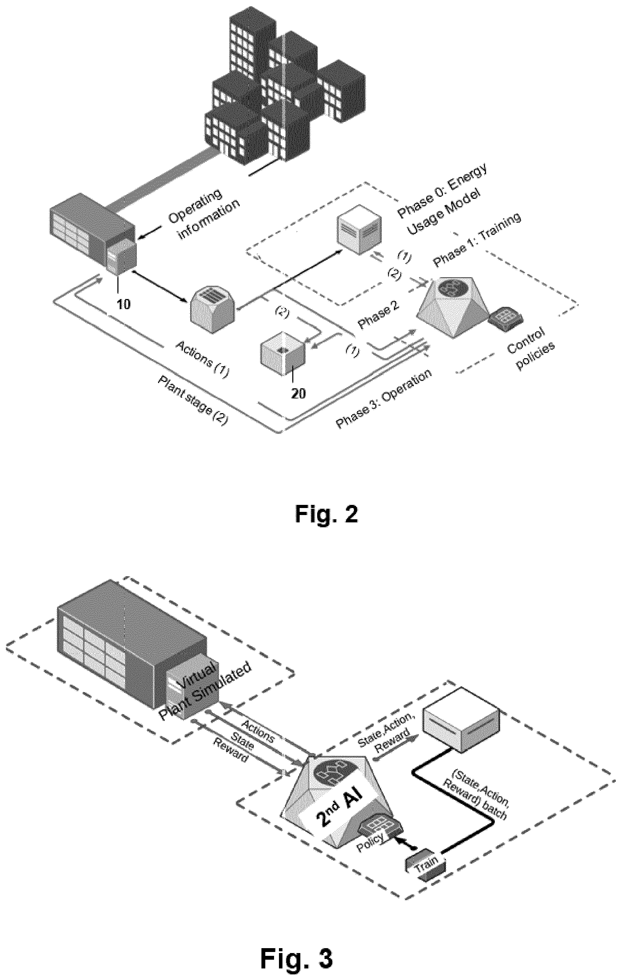

With reference to Figs. 1 and 2, an embodiment of the proposed method is shown therein. According to this embodiment, in step 101 (or phase 0), the method comprises generating an energy usage model (or first prediction model) of a specific automated waste collection plant (or simply collection plant), for example a specific waste collection plant or a fictitious waste collection plant programmed/configured for acquiring operating information of a series of real waste collection plants.

Particularly, the energy usage model is generated by a processing unit that predicts the energy consumption of the emptying cycles of the inlets (i.e., high-speed startup operation, plus the emptying of a series of inlets, plus transport to the central collection point) by means of implementing/executing a first artificial intelligence algorithm, for example, a deep learning-based neural network, using at least part of the operating information of a plurality of real collection plants that is stored in a memory or database.

The operating information comprises real/actual data of each of the emptying cycles of each real collection plant, for instance: the number of inlets of the collection plant being emptied, the distance from the emptied inlets to a collection center, the type of waste, the volume of the waste, the time instant in which the emptying cycle takes place, etc.

The memory or database also stores an energy value corresponding to the energy used in the emptying cycle.

Particularly, the first deep learning-based neural network, for each emptying cycle of the collection plant considered a) computes a predicted energy value using as input (part of or all of) the operating information stored in the memory or database; b) compares the computed predicted value with the stored energy value; and c) adjusts the first deep learning-based neural network until the comparison result is below or equal a given error threshold.

Continuing with the explanation of Fig. 1, once the energy usage model capable of indicating the energy consumption of an emptying cycle has been generated, in step 102 (or phase 1), the method comprises training a virtual agent (i.e. software) by means of implementing a second artificial intelligence algorithm. The second algorithm particularly comprises a neural network based on reinforced learning or deep reinforcement learning-based neural network that is trained during a specified number of episodes/repetitions or until a cost reaches a specified threshold. The trained neural network will be used as the policy agent for the following stages, as explained above.

In step 103 (or phase 2), the previously trained virtual agent receives, in real time, information relating to a loading/capacity state of the inlets of a real collection plant (i.e. a collection plant to be controlled) and establishes one or more emptying control decision-making policies of said real plant taking into consideration the received information and actions considered optimal during training. In one embodiment, information relating to the loading state of the inlets of the real collection plant is received, particularly, via a controller device 10, such as a PLC, installed at the real collection plant and operatively connected to each of the inlets of the real collection plant.

Lastly, in step 104 (or phase 3), the method comprises operating the real collection plant according to the mentioned one or more emptying control decision-making policies established by the virtual agent. In particular, this final operating step is also performed by the controller device 10. In any event, it should be noted that in other embodiments, the operating step could be performed by a computer or PC, among other computing systems.

Likewise, particularly, step 104 is performed once a sufficient time interval in which the virtual agent has not established any incorrect control decision-making policy has passed.

Referring now to Fig. 3, therein an embodiment of how the virtual agent is operated is illustrated. In this embodiment, the training that the virtual agent undergoes is particularly done by considering 1) a simulated plant, which can be a generic non-existing collection plant or a specific existing collection plant, and 2) a sequence of loading/occupation states of such collection plant (i.e., a temporal sequence of user waste drops to the inlets of the simulated plant). Then, using such a simulated plant, the second artificial intelligence algorithm during a given number of episodes/repetitions N or till the simulation reward/cost of the actions reaches a decided threshold first restarts the simulation and puts to zero an actual reward/cost. Then, for a given number of time slots T:
- Gets the loading state of the simulated plant (taking into consideration a previous loading state and the user waste drops from the simulated scenario);
- Selects the most adequate action (i.e. the optimal) from the policy, given by virtual agent, or a random action with probability E;
- simulates the effect of the selected action on the simulated plant (i.e. chaining the state of such plant);

The cost of the action is the economic cost of the energy usage of that action as given by the energy usage model from step 101 and can be altered by other programmed factors (e.g. penalties for not emptying the inlets, etc.) or by solar energy generation availability or energy price;
- Adds the cost to the simulation cost;
- Saves the state, action, and cost to be used later.
- (If used) the probability E of choosing random actions is decreased.

Finally, particularly periodically, all or some of the saved state, action, cost tuples are used as a policy.

In the present invention, the controller device 10 and the virtual agent may operate in parallel. In other words, while the controller device 10 operates the real collection plant, the virtual agent simultaneously receives information about the state of the inlets and makes the corresponding decisions. The virtual agent thereby improves continuously throughout the operation time of the real collection plant.

In one embodiment, these decisions are not directly taken into consideration by the controller device 10, but rather said decisions are previously sent to a monitoring and telemetry system 20 for validation. In other examples, the controller device 10 receives the decisions directly from the virtual agent. In any case, the virtual agent may act as a supervisor to avoid mistaken operating actions in the real collection plant.

In some embodiments, the calculations also comprise implementing a third artificial intelligence algorithm, for example, a deep learning-based neural network, on at least part of the operating information stored in the memory or database for calculating a time duration model (or second prediction model) of the time each emptying cycle takes. Additional variables, such as the price of the energy (based on the time), temporal data (day of the week, etc.), time prediction if solar energy is used in the collection plant, etc., which allow even further optimizing the simulated model, are thereby taken into account.

Therefore, in the present invention the virtual agent is configured for observing one or more real collection plants to be controlled, as well as their environment (for example, the cost of energy, the time of the day on which waste collection takes place, etc.), such that the virtual agent can establish/provide the different decision-making control policies and perform actions that affect the environment of the mentioned collection plant(s), for example establishing emptying sequences, activating or deactivating vacuum-based emptying systems for emptying the inlets, increasing or reducing the speed of vacuum-based emptying systems, etc. The virtual agent is configured for performing the preceding actions hundreds or thousands of times taking different scenarios into consideration.

The proposed invention can be implemented in hardware, software, firmware, or any combination thereof. If it is implemented in software, the functions can be stored in or be encoded as one or more code instructions in a computer-readable medium.

The scope of the present invention is defined in the attached claims.

## Claims

1. A method for the intelligent control of waste collection in an automated waste collection plant, comprising:
storing operating information of a plurality of real automated waste collection plants in a memory or database, wherein the operating information includes, for each of a number of the emptying cycles of each plant: number of inlets of the plant being emptied, distance from the emptied inlets to a collection center, type of waste, volume of the waste, and time instant in which the emptying cycle takes place, and further storing an energy value corresponding to the energy used in the corresponding emptying cycle in the memory or database;
generating, by a processing unit, an energy usage model of a specific automated waste collection plant by running a first artificial intelligence algorithm comprising a first neural network, the first neural network, for each emptying cycle of the specific automated waste collection plant, comprising:
a) computing a predicted energy value using as inputs the operating information stored in the memory or database,
b) comparing the computed predicted energy value with the energy value stored in the memory or database; and
c) adjusting the weighted associations of the first neural network if the comparison provides a different result; and
steps a) to c) being repeated until a comparation result is below or equal a given error threshold;
training, by a processing unit, a virtual agent by means of running a second artificial intelligence algorithm comprising a second neural network, the second neural network evaluating the energy consumption of a series of actions of the specific automated waste collection plant or of another automated waste collection plant, in response to a plurality of waste loading situations in the inlets, by means of:
i) selecting, given a loading state of the specific/another automated waste collection plant, a given action to perform;
ii) evaluating a cost of said given action using the generated energy usage model;
iii) minimizing the cost by means of adjusting the weighted associations of the second neural network;
steps i) to iii) being repeated until the cost is below or equal a given threshold or for a limited number of repetitions;
receiving, by the virtual agent, in real time, information relating to a loading state of the inlets of a real automated waste collection plant, and establishing, by the virtual agent, one or more emptying control decision-making policies of the real automated waste collection plant based on the received information and on actions considered optimal during the training of the virtual agent; and
operating the real automated waste collection plant according to said one or more emptying control decision-making policies established by the virtual agent.

2. The method according to claim 1, further comprising calculating a time duration model of the time each emptying cycle takes by means of running a third artificial intelligence algorithm, comprising a third neural network, on at least part of the operating information stored in the memory or database.

3. The method according to claim 1, wherein the first neural network comprises a deep learning-based neural network.

4. The method according to claim 2, wherein the third neural network comprises a deep learning-based neural network.

5. The method according to any one of the preceding claims, wherein the second neural network comprises a deep reinforcement learning-based neural network.

6. The method according to any one of the preceding claims, wherein the operating step is performed by a controller device, operatively connected to each of the inlets of the real automated waste collection plant, after having received the control decision from the virtual agent.

7. The method according to any one of the preceding claims, comprising, prior to the step of operating the real automated waste collection plant according to said one or more emptying control decision-making policies established by the virtual agent, verifying, by a processing unit, from information relating to the loading state of the inlets of the real automated waste collection plant if the emptying control decision-making policies adopted are determining factors of a real energy consumption optimization.

8. The method according to any one of the preceding claims, wherein said one or more emptying control decision-making policies comprise at least one of: emptying one or more of the inlets of the real automated waste collection plant; activating or deactivating vacuum-based emptying systems for emptying the inlets; and/or increasing or reducing the speed of vacuum-based emptying systems for emptying the inlets.

9. The method according to any one of the preceding claims, wherein the specific automated waste collection plant comprises a virtual automated waste collection plant which compiles operating information of a plurality of real waste collection plants.

10. A computer program product including code instructions which, when implemented in a computing system, implement a method according to any one of claims 1 to 9.

## Patentansprüche

1. Verfahren zur intelligenten Steuerung der Abfallsammlung in einer automatisierten Abfallsammelanlage, umfassend:
Speichern von Betriebsinformationen einer Vielzahl von realen automatisierten Abfallsammelanlagen in einem Speicher oder einer Datenbank, wobei die Betriebsinformationen für jeden einer Anzahl von Entleerungszyklen jeder Anlage Folgendes enthalten: Anzahl der Einlässe der Anlage, die geleert werden, Entfernung von den geleerten Einlässen zu einem Sammelzentrum, Art des Abfalls, Volumen des Abfalls und Zeitpunkt, zu dem der Entleerungszyklus stattfindet, und ferner Speichern eines Energiewerts, der der in dem entsprechenden Entleerungszyklus verwendeten Energie entspricht, in dem Speicher oder der Datenbank;
Generieren eines Energienutzungsmodells einer spezifischen automatisierten Abfallsammelanlage durch eine Verarbeitungseinheit, indem ein erster Algorithmus der künstlichen Intelligenz ausgeführt wird, der ein erstes neuronales Netzwerk umfasst, wobei das erste neuronale Netzwerk für jeden Entleerungszyklus der spezifischen automatisierten Abfallsammelanlage Folgendes umfasst:
a) Berechnen eines vorhergesagten Energiewertes unter Verwendung der im Speicher oder in der Datenbank gespeicherten Betriebsinformationen als Eingaben,
b) Vergleichen des berechneten vorhergesagten Energiewertes mit dem im Speicher oder in der Datenbank gespeicherten Energiewert; und
c) Anpassen der gewichteten Zuordnungen des ersten neuronalen Netzwerks, falls der Vergleich ein unterschiedliches Ergebnis liefert; und
wobei die Schritte a) bis c) wiederholt werden, bis ein Vergleichsergebnis unter oder gleich einem gegebenen Fehlerschwellenwert liegt;
Trainieren eines virtuellen Agenten mittels einer Verarbeitungseinheit durch Ausführen eines zweiten Algorithmus der künstlichen Intelligenz, der ein zweites neuronales Netzwerk umfasst, wobei das zweite neuronale Netzwerk den Energieverbrauch einer Reihe von Aktionen der spezifischen automatisierten Abfallsammelanlage oder einer anderen automatisierten Abfallsammelanlage als Reaktion auf eine Vielzahl von Abfallbeladungssituationen in den Einlässen auswertet, mittels:
i) Auswählen einer gegebenen Aktion, die durchzuführen ist, wenn ein Beladungszustand der spezifischen/anderen automatisierten Abfallsammelanlage gegeben ist;
ii) Auswerten der Kosten der gegebenen Aktion unter Verwendung des generierten Energienutzungsmodells;
iii) Minimieren der Kosten mittels Anpassen der gewichteten Zuordnungen des zweiten neuronalen Netzwerks;
wobei Schritte i) bis iii) wiederholt werden, bis die Kosten unter oder gleich einem gegebenen Schwellenwert liegen oder für eine eingeschränkte Anzahl von Wiederholungen;
Empfangen von Informationen über einen Beladungszustand der Einlässe einer realen automatisierten Abfallsammelanlage durch den virtuellen Agenten in Echtzeit und Festlegen einer oder mehrerer Entscheidungsrichtlinien für die Entleerungssteuerung der realen automatisierten Abfallsammelanlage durch den virtuellen Agenten basierend auf den empfangenen Informationen und auf Aktionen, die während des Trainierens des virtuellen Agenten als optimal angesehen werden; und
Betreiben der realen automatisierten Abfallsammelanlage gemäß der einen oder mehreren vom virtuellen Agenten festgelegten Entscheidungsrichtlinien zur Entleerungssteuerung.

2. Verfahren nach Anspruch 1, ferner umfassend das Berechnen eines Zeitdauermodells der Zeit, die jeder Entleerungszyklus benötigt, durch Ausführen eines dritten Algorithmus der künstlichen Intelligenz, der ein drittes neuronales Netzwerk umfasst, auf mindestens einem Teil der im Speicher oder in der Datenbank gespeicherten Informationen.

3. Verfahren nach Anspruch 1, wobei das erste neuronale Netzwerk ein auf Deep Learning basierendes neuronales Netzwerk umfasst.

4. Verfahren nach Anspruch 2, wobei das dritte neuronale Netzwerk ein auf Deep Learning basierendes neuronales Netzwerk umfasst.

5. Verfahren nach einem der vorhergehenden Ansprüche, wobei das zweite neuronale Netzwerk ein auf Deep Reinforcement Learning basierendes neuronales Netzwerk umfasst.

6. Verfahren nach einem der vorhergehenden Ansprüche, wobei der Betriebsschritt von einer Controllervorrichtung durchgeführt wird, die betriebsmäßig mit jedem der Einlässe der realen automatisierten Abfallsammelanlage verbunden ist, nachdem sie die Steuerungsentscheidung von dem virtuellen Agenten empfangen hat.

7. Verfahren nach einem der vorhergehenden Ansprüche, umfassend, vor dem Schritt des Betreibens der realen automatisierten Abfallsammelanlage gemäß der einen oder mehreren vom virtuellen Agenten festgelegten Entscheidungsrichtlinien zur Entleerungssteuerung, das Verifizieren, durch eine Verarbeitungseinheit, von Informationen bezüglich des Beladungszustandes der Einlässe der realen automatisierten Abfallsammelanlage, ob die angenommenen Entscheidungsrichtlinien zur Entleerungssteuerung bestimmende Faktoren für eine reale Energieverbrauchsoptimierung sind.

8. Verfahren nach einem der vorhergehenden Ansprüche, wobei die eine oder die mehreren Entscheidungsrichtlinien zur Entleerungssteuerung mindestens eines von Folgendem umfasst: Entleeren eines oder mehrerer der Einlässe der realen automatisierten Abfallsammelanlage; Aktivieren oder Deaktivieren von vakuumbasierten Entleerungssystemen zum Entleeren der Einlässe; und/oder Erhöhen oder Verringern der Geschwindigkeit von vakuumbasierten Entleerungssystemen zum Entleeren der Einlässe.

9. Verfahren nach einem der vorhergehenden Ansprüche, wobei die spezifische automatisierte Abfallsammelanlage eine virtuelle automatisierte Abfallsammelanlage umfasst, die Betriebsinformationen einer Vielzahl von realen Abfallsammelanlagen zusammenstellt.

10. Computerprogrammprodukt, das Codeanweisungen enthält, die, wenn sie in einem Computersystem implementiert werden, ein Verfahren nach einem der Ansprüche 1 bis 9 implementieren.

## Revendications

1. Procédé de commande intelligente de la collecte des déchets dans une installation automatisée de collecte des déchets, comprenant :
le stockage d'informations de fonctionnement d'une pluralité d'installations automatisées réelles de collecte des déchets dans une mémoire ou une base de données, dans lequel les informations de fonctionnement comprennent, pour chacun d'un certain nombre de cycles de vidange de chaque installation : le nombre d'orifices d'entrée de l'installation vidangés, la distance entre les orifices d'entrée vidangés et un centre de collecte, le type de déchets, le volume des déchets, et l'instant temporel auquel le cycle de vidange a lieu, et le stockage en outre, dans la mémoire ou la base de données, d'une valeur d'énergie correspondant à l'énergie utilisée dans le cycle de vidange correspondant ;
la génération, par une unité de traitement, d'un modèle de consommation d'énergie d'une installation automatisée spécifique de collecte des déchets en exécutant un premier algorithme d'intelligence artificielle comprenant un premier réseau neuronal, ledit premier réseau neuronal comprenant, pour chaque cycle de vidange de ladite installation automatisée spécifique de collecte des déchets :
a) le calcul d'une valeur d'énergie prédite en utilisant comme entrées les informations de fonctionnement stockées dans la mémoire ou la base de données,
b) la comparaison de la valeur d'énergie prédite calculée avec la valeur d'énergie stockée dans la mémoire ou la base de données ; et
c) l'ajustement des associations pondérées du premier réseau neuronal si la comparaison fournit un résultat différent ; et
les étapes a) à c) étant répétées jusqu'à ce qu'un résultat de comparaison soit inférieur ou égal à un seuil d'erreur donné ;
l'entraînement, par une unité de traitement, d'un agent virtuel au moyen de l'exécution d'un second algorithme d'intelligence artificielle comprenant un second réseau neuronal, ledit second réseau neuronal évaluant la consommation d'énergie d'une série d'actions de ladite installation automatisée spécifique de collecte des déchets ou d'une autre installation automatisée de collecte des déchets, en réponse à une pluralité de situations de chargement des déchets dans les orifices d'entrée, au moyen de :
i) la sélection, compte tenu d'un état de chargement de ladite installation automatisée spécifique ou de ladite autre installation automatisée de collecte des déchets, d'une action donnée à effectuer ;
ii) l'évaluation d'un coût de ladite action donnée en utilisant le modèle de consommation d'énergie généré ;
iii) la minimisation du coût au moyen de l'ajustement des associations pondérées du second réseau neuronal ;
les étapes i) à iii) étant répétées jusqu'à ce que le coût soit inférieur ou égal à un seuil donné ou pendant un nombre limité de répétitions ;
la réception, par l'agent virtuel, en temps réel, d'informations relatives à un état de chargement des orifices d'entrée d'une installation automatisée réelle de collecte des déchets, et l'établissement, par l'agent virtuel, d'une ou de plusieurs politiques de prise de décision de commande de vidange de ladite installation automatisée réelle de collecte des déchets sur la base des informations reçues et des actions considérées comme optimales lors de l'entraînement de l'agent virtuel ; et
le fonctionnement de ladite installation automatisée réelle de collecte des déchets selon ladite ou lesdites politiques de prise de décision de commande de vidange établies par l'agent virtuel.

2. Procédé selon la revendication 1, comprenant en outre le calcul d'un modèle de durée temporelle du temps que prend chaque cycle de vidange au moyen de l'exécution d'un troisième algorithme d'intelligence artificielle, comprenant un troisième réseau neuronal, sur au moins une partie des informations de fonctionnement stockées dans la mémoire ou la base de données.

3. Procédé selon la revendication 1, dans lequel le premier réseau neuronal comprend un réseau neuronal basé sur l'apprentissage profond.

4. Procédé selon la revendication 2, dans lequel le troisième réseau neuronal comprend un réseau neuronal basé sur l'apprentissage profond.

5. Procédé selon l'une quelconque des revendications précédentes, dans lequel le second réseau neuronal comprend un réseau neuronal basé sur l'apprentissage par renforcement profond.

6. Procédé selon l'une quelconque des revendications précédentes, dans lequel l'étape de fonctionnement est réalisée par un dispositif de commande, relié de manière opérationnelle à chacun des orifices d'entrée de l'installation automatisée réelle de collecte des déchets, après avoir reçu la décision de commande de l'agent virtuel.

7. Procédé selon l'une quelconque des revendications précédentes, comprenant, avant l'étape de fonctionnement de l'installation automatisée réelle de collecte des déchets selon ladite ou lesdites politiques de prise de décision de commande de vidange établies par l'agent virtuel, la vérification, par une unité de traitement, à partir d'informations relatives à l'état de chargement des orifices d'entrée de l'installation automatisée réelle de collecte des déchets, si les politiques de prise de décision de commande de vidange adoptées constituent des facteurs déterminants d'une optimisation réelle de la consommation d'énergie.

8. Procédé selon l'une quelconque des revendications précédentes, dans lequel ladite ou lesdites politiques de prise de décision de commande de vidange comprennent au moins l'une des mesures suivantes : la vidange d'un ou de plusieurs des orifices d'entrée de l'installation automatisée réelle de collecte des déchets ; l'activation ou la désactivation de systèmes de vidange basés sur le vide pour la vidange des orifices d'entrée ; et/ou l'augmentation ou la réduction de la vitesse de systèmes de vidange basés sur le vide pour la vidange des orifices d'entrée.

9. Procédé selon l'une quelconque des revendications précédentes, dans lequel l'installation automatisée spécifique de collecte des déchets comprend une installation automatisée virtuelle de collecte des déchets qui compile des informations de fonctionnement d'une pluralité d'installations réelles de collecte des déchets.

10. Produit programme informatique comprenant des instructions de code qui, lorsqu'elles sont mises en œuvre dans un système informatique, mettent en œuvre un procédé selon l'une quelconque des revendications 1 à 9.
